# EUROPÄISCHE PATENTSCHRIFT

(11) **EP 2 315 182 B1**
(45) Veröffentlichungstag und Bekanntmachung des Hinweises auf die Patenterteilung: **20.05.2015**
(21) Anmeldenummer: 10177081.6
(22) Anmeldetag: 16.09.2010
(51) Int. Cl.: G07C 9/00, H01M 2/10, H01R 13/24

(54) **Batterieaufnahme für einen Kraftfahrzeugschlüssel**
Battery compartment for a motor vehicle key
Compartiment de batterie pour une clé de véhicule automobile

(30) Priorität: 21.10.2009 DE 102009045906; 21.07.2010 DE 102010036551
(43) Veröffentlichungstag der Anmeldung: 27.04.2011
(73) Patentinhaber: Huf Hülsbeck & Fürst GmbH & Co. KG, 42551 Velbert (DE)
(72) Erfinder: Geldmacher, Alexander, 42113, Wuppertal (DE)
(74) Vertreter: Zenz Patentanwälte Partnerschaft mbB

(56) Entgegenhaltungen:
- EP-A2- 0 413 144
- EP-A2- 1 837 831
- WO-A1-2009/084480
- WO-A2-2008/122005
- DE-U1- 9 407 781
- JP-A- 11 297 289
- US-A1- 2005 287 423
- US-A1- 2009 023 331

## Beschreibung

Die vorliegende Erfindung betrifft einen Kraftfahrzeugschlüssel, und insbesondere die Batterieaufnahme für einen solchen Kfz-Schlüssel.

Moderne Kfz-Schlüssel umfassen eine elektronische Baugruppe, die regelmäßig eine Sender- und Empfängereinheit aufweist, mittels welcher ein Kraftfahrzeug entriegelt und verriegelt werden kann. Neben diesen grundlegenden Funktionalitäten der elektronischen Baugruppe werden dieser in jüngster Zeit zunehmend weitere Funktionalitäten zugeordnet, so dass es notwendig ist, die Energieversorgung der elektronischen Baugruppe entsprechend anzupassen. Zur Energieversorgung der elektronischen Baugruppe ist üblicherweise eine austauschbare Batterie in dem Schlüssel angeordnet, und zwar in einer entsprechenden Batterieaufnahme. Die Batterie ist über Kontaktelemente mit der Baugruppe gekoppelt, wobei üblicherweise ein Kontaktelement die Batterie gegen einen Anschlag innerhalb des Schlüssels drückt, um einen ständigen Kontakt zu der Batterie zu gewährleisten, während das andere Kontaktelement beispielsweise in der Wand der Batterieaufnahme angeordnet ist.

Der steigende Energiebedarf der elektronischen Baugruppe bedingt größere und schwerere Batterien. Wird der Schlüssel betätigt oder ruckartig bewegt, übertragen sich Schwingungen auf die Batterie, die dazu führen können, dass der Kontakt zwischen der Batterie und dem Kontaktelement, welches die Batterie gegen einen Anschlag drücken soll, nicht gewährleistet ist, wobei im Extremfall eine plastische Deformation des federnden Abschnittes des Kontaktelementes auftreten kann. Der Abbruch des Kontaktes zwischen der Batterie und dem Kontaktelement kann zu einer Fehlfunktion des Schlüssels führen.

Die EP 1 837 831 A1 beschreibt beispielsweise ein Batteriegehäuse für eine tragbare Vorrichtung, wobei dieses Gehäuse eine Batterieaufnahme und Kontaktmittel aufweist, wobei eines der Kontaktmittel federnd ausgebildet ist und die Batterie gegen ein Haltelement drückt. Maßnahmen gegen eine plastische Verformung sind nicht vorgehen.

Aus der EP 0 413 144 A2 ist eine Batteriehalterung mit einem federnden Kontaktelement bekannt. Die Batteriehaltung umfasst ferner ein Haltelement, welches einer übermäßigen plastischen Verformung des Kontaktelements vorbeugt.

Die DE 94 07 781 U1 beschreibt einen elektroakustischen Wandler, der über elektrische Druckkontakte mit einer Leiterplatte in Verbindung steht. Um eine zu große mechanische Belastung der Druckkontakte im eingebauten Zustand des Wandlers zu vermeiden, z.B. bei einer kurzfristigen Stoß- oder Schlagbelastung, sind auf der Oberfläche des Wandlers Zapfen vorgesehen, deren Endbereiche im montierten Zustand geringfügig beabstandet zur Leiterplatte verlaufen. Bei ausgeübten Stoß-und Schlagbelästungen gelangt die Leiterplatte an den Zapfen zur Anlage und die Druckkontakte werden nicht weiter verformt.

Aus der US 2009/0023331 ist eine Batteriehalterung mit federnden Kontaktelementen und federnden Dämpfungselementen bekannt. Die Dämpfungselemente stehen mit der Batterie in Kontakt.

Es ist Aufgabe der vorliegenden Erfindung, eine Batterieaufnahme für einen Kfz-Schlüssel bereitzustellen, die bei zunehmendem Gewicht einer Batterie Fehlfunktionen des Schlüssels aufgrund eines Kontaktabbruches zwischen der Batterie und einem Kontaktelement vermeidet.

Diese Aufgabe wird erfindungsgemäß gelöst durch eine Batterieaufnahme für einen Kfz-Schlüssel, die eine Aufnahmeschale für eine Batterie, Haltemittel, die die Batterie in der Aufnahmeschale fixieren, und Kontaktelemente aufweist, die mit einer elektronischen Baugruppe innerhalb des Kfz-Schlüssels leitend gekoppelt sind, wobei ein erstes Kontaktelement in der Aufnahmeschale angeordnet ist und federnde Kontaktabschriitte aufweist, auf denen die Batterie aufliegt und die die Batterie gegen die Haltemittel drücken. In der Aufnahmeschale der erfindungsgemäßen Batterieaufnahme ist zumindest ein Dämpfungselement derart angeordnet, dass dieses ein Verschieben der Batterie hin zu dem in der Aufnahmeschale angeordneten Kontaktelement begrenzt, wobei das Dämpfungselement federnd ausgebildet ist und im unbelasteten Zustand der Batterieaufnahme kein Kontakt zwischen der Batterie und dem zumindest einen Dämpfungselement besteht.

Wie bereits angedeutet können bei herkömmlichen Batterien Schwingungen der Batterie einen Kontaktabbruch zwischen einem Kontaktelement und der Batterie selber bedingen. Das zunehmende Gewicht der Batterie kann ferner dazu führen, dass die durch die Batterie auf ein Kontaktelement ausgeübte Krafteinwirkung eine plastische, d.h. dauerhafte Deformation des Kontaktelementes bedingt.

Um dies zu verhindern, begrenzt das in der Aufnahmeschale angeordnete Dämpfungselement den Bewegungsfreiraum der Batterie, das heißt die Bewegungsmöglichkeit der Batterie in die Aufnahmeschale hinein. Im unbelasteten Zustand der Batterieaufnahme bzw. des Kfz-Schlüssels besteht kein Kontakt zwischen der Batterie und dem zumindest einen Dämpfungselement, d.h. das Dämpfungselement trägt nicht durch eine zusätzliche Federkraft zu einer Erhöhung des Drucks auf das bzw. die Haltemittel bei.

Bei der Übertragung von Schwingungen auf die Batterie bewegt sich diese gegen die Federkraft der federnden Kontaktabschnitte in die Aufnahmeschale hinein, und diese Bewegung wird durch das Dämpfungselement bzw. die Dämpfungsabschnitte gestoppt, wobei die Bewegung bei einem starren Dämpfungselement abrupt gestoppt wird. Aufgrund der Massenträgheit können sich jedoch ggf. die federnden Kontaktabschnitte weiter in die Aufnahmeschale bewegen und diese Bewegung kann einen Kontaktabbruch zwischen der Batterie und den Kontaktabschnitten bedingen. Um ein abruptes Abstoppen der Bewegung der Batterie zu vermeiden, ist das Dämpfungselement bzw. die Dämpfungsabschnitte des kombinierten Kontakt/Dämpfungselements erfindungsgemäß federnd bzw. elastisch ausgebildet sind.

Die Anordnung des zumindest einen Dämpfungselementes in der Aufnahmeschale ist weitgehend beliebig, solange die oben erwähnte Bewegungseinschränkung der Batterie gegeben ist, wobei es jedoch bevorzugt ist, dass das Dämpfungselement derart angeordnet ist, dass ein Verkippen der Batterie innerhalb der Aufnahmeschale vermieden wird. Im einfachsten Fall kann das Dämpfungselement beispielsweise zentral zwischen zwei federnden Kontaktabschnitten des Kontaktelementes angeordnet sein.

Das Kontaktelement kann eine Grundplatte umfassen, wobei in einem solchen Fall das in der Aufnahmeschale angeordnete Dämpfungselement eine Verschiebung der Batterie hin zu der Grundplatte derart begrenzt, dass ein Kontakt zwischen der Batterie und der Grundplatte vermieden wird. Die Verwendung eines Kontaktelementes mit Grundplatte ermöglicht es, dass das Kontaktelement mit einer großen Fläche aufliegt, gleichzeitig aber federnde Abschnitte umfasst, wobei eine großflächige Grundplatte den Vorteil hat, dass das Kontaktelement selber über diese Fläche gut zu befestigen ist.

Das Dämpfungselement kann aus einem nicht leitenden Material gebildet sein, es ist jedoch bevorzugt, dass das Dämpfungselement, oder zumindest ein Abschnitt des Dämpfungselementes, aus einem leitenden Material ausgebildet ist und das leitende Dämpfungselement bzw. der leitende Abschnitt des Dämpfungselementes mit der elektronischen Baugruppe des Schlüssels gekoppelt ist. Dies hat den Vorteil, dass das Dämpfungselement im Schwingungsfall die Energieübertragung zwischen der Batterie und der elektronischen Baugruppe unterstützt.

Bei einem bevorzugten Ausführungsbeispiel der erfindungsgemäßen Batterieaufnahme ist das Dämpfungselement einstückig mit dem ersten Kontaktelement ausgeformt und bildet mit diesem ein kombiniertes Kontakt/Dämpfungselement. Ein solches kombiniertes Kontakt/Dämpfungselement ist besonderes günstig herzustellen und ein Mehraufwand bei der Herstellung des Kfz-Schlüssels wird vermieden. Um ein Verkippen der Batterie in der Aufnahmeschale zu vermeiden weist das Kontakt/Dämpfungselement vorzugsweise mehrere Dämpfungsabschnitte und Kontaktabschnitte auf. Die federnde Ausgestaltung des Dämpfungselements bzw. der Dämpfungsabschnitte des kombinierten Kontakt/Dämpfungselements trägt ferner zur Schonung der Batterie selber bei.

Es ist besonders bevorzugt, dass die Federkraft des Dämpfungselementes bzw. der Dämpfungsabschnitte des kombinierten Kontakt/Dämpfungselements größer als die Federkraft der Kontaktabschnitte des Kontaktelementes ist.

Die räumliche Anordnung bzw. Verteilung der Kontaktabschnitte und der Dämpfungsabschnitte des Kontakt/Dämpfungselementes ist im Prinzip beliebig, es ist jedoch bevorzugt, dass sich die Kontaktabschnitte und die Dämpfungsabschnitte des Kontakt/Dämpfungselementes radial alternieren von dem Mittelpunkt nach Außen hin erstrecken. Eine solche sternförmige Ausbildung des Kontakt/Dämpfungselementes bedingt eine ideale Dämpfung der Batterie und verhindert gleichzeitig ein Verkippen der Batterie innerhalb der Aufnahmeschale, wodurch ein unterbrechungsloser Kontakt zwischen der Batterie und den federnden Kontaktabschnitte gewährleistet ist. Eine derartige Ausgestaltung des Kontakt/Dämpfungselementes ist ferner gut an die übliche runde Ausgestaltung der Batterie angepasst.

Alternativ kann das Kontakt/Dämpfungselement derart ausgebildet sein, dass sich die Kontaktabschnitte und die Dämpfungsabschnitte von der Längsachse des Kontakt/Dämpfungselementes nach Außen hin erstrecken, wobei sich die genaue Verteilung der Dämpfungs- und Kontaktabschnitte primär nach der Anzahl der Abschnitte richtet. Bei einem Kontakt/Dämpfungselement mit jeweils drei Abschnitten ist es beispielsweise vorteilhaft, die jeweiligen Abschnitte V-förmig zu verteilen, so dass stets ein Kontaktabschnitt gegenüber einem Dämpfungsabschnitt angeordnet ist.

Konstruktionsbedingt bewegt sich die Batterie bei jeder stärkeren Bewegung in der Batterieaufnahme bzw. hin zu der Grundplatte, wobei bei solchen Bewegungen insbesondere die Bereiche der Batterie einer Abnutzung unterliegen, bei welchen die Batterie auf den federnden Kontaktabschnitten bzw. den Dämpfungsabschnitten im Schwingungsfall aufliegt. Bewegt sich die Batterie im Schwingungsfall weiter in die Aufnahme hinein gleiten zunächst die federnden Kontaktabschnitte und, bei entsprechender Bewegung in die Aufnahme hinein, später auch die Dämpfungsabschnitte an der Unterseite der Batterie entlang und verursachen eine Abnutzung, wobei diese im Extremfall zu einer Beschädigung der Batterie oder zumindest zu einer Verminderung des Kontaktbereiches führen kann. Ferner kann die bei der Bewegung der Batterie zwangsläufig auftretende Verbiegung der federnden Kontaktabschnitte und/oder der Dämpfungselemente eine unregelmäßige Kontaktierung zu der Batterie bedingen. Es ist daher bevorzugt, dass die federnden Kontaktabschnitte und/oder die Dämpfungsabschnitte bei ihren Batterie-Kontaktbereichen kalottenförmig bzw. ballig ausgebildet sind. Eine solche Ausgestaltung der Kontaktelemente vermeidet zum einen eine Beschädigung der Batterie und zum anderen gewährleistet sie, dass auch bei einer Verbiegung der federnden Kontaktabschnitte und/oder der Dämpfungsabschnitte stets ein Kontakt zur Batterie gewährleistet ist.

Die Erfindung wird nun anhand mehrerer Ausführungsbeispiele erläutert, welche in der beiliegenden Zeichnung dargestellt sind, wobei
Figuren 1a, 1b eine schematische Schnittansicht eines ersten Ausführungsbeispiels der erfindungsgemäßen Batterieaufnahme zeigen,
Figur 2 eine Schrägansicht eines zweiten Ausführungsbeispiels zeigt,
Figuren 3a, 3b und 3c verschiedene Detailansichten des in Figur 2 gezeigten Ausführungsbeispiels zeigen und
Figuren 4a, 4b und 4c eine Batterieaufnahme gemäß dem Stand der Technik zeigen.

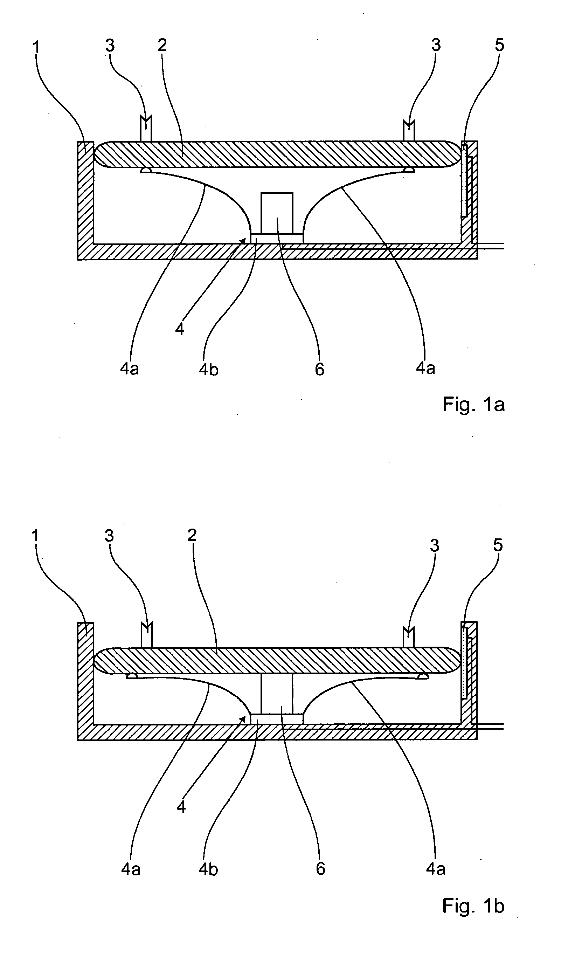

In den Figuren 1a und 1b ist eine Schnittansicht eines ersten Ausführungsbeispiels gezeigt, wobei lediglich die für das Ausführungsbeispiel wesentlichen Teile genauer wiedergegeben sind. Die erfindungsgemäße Batterieaufnahme kann bei jedem üblichen, eine elektronische Baugruppe umfassenden Kfz-Schlüssel verwendet werden. Solche üblichen Kfz-Schlüssel umfassen im Allgemeinen mehrere Betätigungselemente, beispielsweise zum Öffnen und Schließen des Kraftfahrzeuges oder zum Öffnen des Kofferraumes, die mit der elektronischen Baugruppe gekoppelt sind. Die elektronische Baugruppe umfasst unter anderem eine Sende- und Empfangseinheit zum Öffnen/Verriegeln des Fahrzeuges, und ist über Leitungen, die lediglich angedeutet sind, und Kontaktelemente mit der Batterie leitend gekoppelt.

In Figur 1a ist die Batterie 2 in der Ruhelage gezeigt. In dieser Ruhelage wird die Batterie 2 von zwei federnden Kontaktabschnitten 4a eines ersten Kontaktelementes 4 gegen Haltemittel 3 gedrückt. Das Kontaktelement 4 ist bei diesem Ausführungsbeispiel derart ausgebildet, dass sich die federnden Kontaktabschnitte von einer Grundplatte 4b des Kontaktelements nach außen erstrecken und bei ihren Batterie-Kontaktabschnitten kalöttenförmig ausgebildet sind.

Das bzw. die Haltemittel 3 können von einer (nicht gezeigten) Abdeckung der Aufnahmeschale bereitgestellt werden, sie können jedoch auch mit der Aufnahmeschale 1 gekoppelt sein. Die Aufnahmeschale 1 umfasst ein zweites Kontaktelement 5, und die beiden Kontaktelemente 4, 5 sind über Leitungen mit einem (nicht gezeigten) elektronischen Bauteil des Schlüssels verbunden. Zwischen den federnden Kontaktabschnitten 4a des ersten Kontaktelementes 4, d.h. auf der Grundplatte 4b, ist ein Dämpfungselement 6 angeordnet, welches eine Bewegung der Batterie 2 hin zu der Grundplatte 4b (d.h. in die Aufnahmeschale 1) begrenzt und somit einen Kontaktabbruch zwischen der Batterie und dem Kontaktelement 4 bzw. eine plastische Deformation eines oder mehrerer Kontaktabschnitte 4a verhindert. Bei dem gezeigten Ausführungsbeispiel sind die federnden Kontaktabschnitte im Kontaktbereich zur Batterie ballig bzw. kalottenförmig ausgebildet, was einen optimalen Kontakt zu Batterie 2 gewährleistet und ferner die Oberfläche der Batterie, über welche sich der ballige bzw. kalottenförmige Abschnitt bei einer Bewegung der Batterie in die Aufnahmeschale 1 bzw. hin zu der Grundplatte 4b bewegt, schont. Bei herkömmlichen Batterieaufnahmen kann eine starke Bewegung der Batterie in die Aufnahmeschale dazu führen, dass aufgrund der Durchbiegung eines federnden Kontaktabschnittes nicht mehr der ballige Abschnitt in Kontakt mit der Batterie ist, sondern vielmehr der Steg des Kontaktabschnittes - dies kann zu einer Schwächung des Kontaktes zur Batterie und Beschädigungen der Batterieoberfläche führen. Das Dämpfungselement verhindert eine solche unerwünschte Bewegung, wodurch die obigen Nachteile vermieden werden.

Wird der Schlüssel in Schwingung versetzt, beispielsweise durch eine rasche abrupte Bewegung des Schlüssels oder durch die Betätigung eines der oben genannten Betätigungselemente, überträgt sich diese Schwingung auf die Batterie 1, und diese bewegt sich gegen die Federkraft der federnden Kontaktabschnitte 4a in die Aufnahmeschale 1 in Richtung auf das Dämpfungselement 6 bzw. die Grundplatte 4b. Das Dämpfungselement 6 stellt einen Anschlag für die Batterie 1 bereit, der eine weitere Bewegung der Batterie in die Aufnahmeschale 1 bzw. hin zu der die Grundplatte 4b verhindert, wodurch eine plastische Deformation der federnden Kontaktabschnitte 4a des ersten Kontaktelementes 4 verhindert wird und die oben genannten Nachteile vermieden werden.

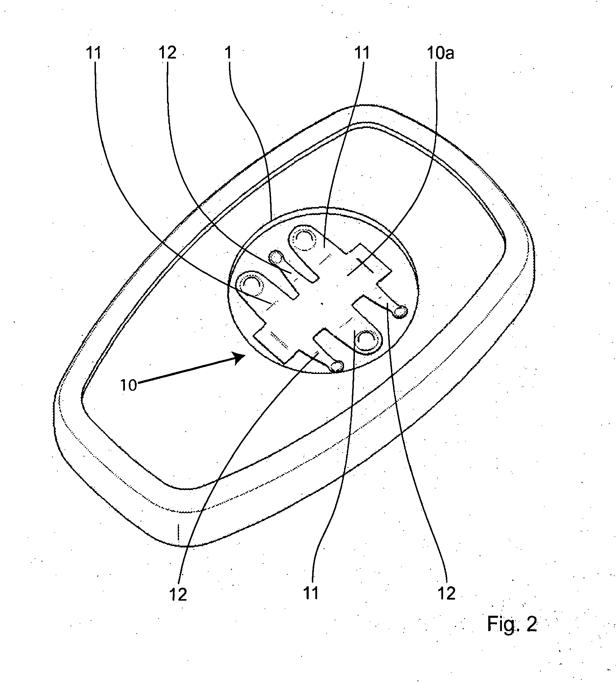

Figur 2 zeigt eine Ansicht eines zweiten Ausführungsbeispiels der erfindungsgemäßen Batterieaufnahme, wobei bei diesem Ausführungsbeispiel das erste Kontaktelement und das Dämpfungselement als einstückiges Kontakt/Dämpfungselement 10 ausgebildet sind. Bei dem gezeigten Ausführungsbeispiel umfasst das Kontakt/Dämpfungselement 10 eine Grundplatte 10a, drei sich von der Grundplatte 10a erstreckende Dämpfungsabschnitte 11 sowie drei sich von der Grundplatte 10a erstreckende Kontaktabschnitte 12, wobei diese derart angeordnet sind, dass stets einem Dämpfungsabschnitt ein Kontaktabschnitt gegenüberliegt. Das kombinierte Kontakt/Dämpfungselement ist über eine (nicht gezeigte) Leitung mit dem elektronischen Bauteil gekoppelt.

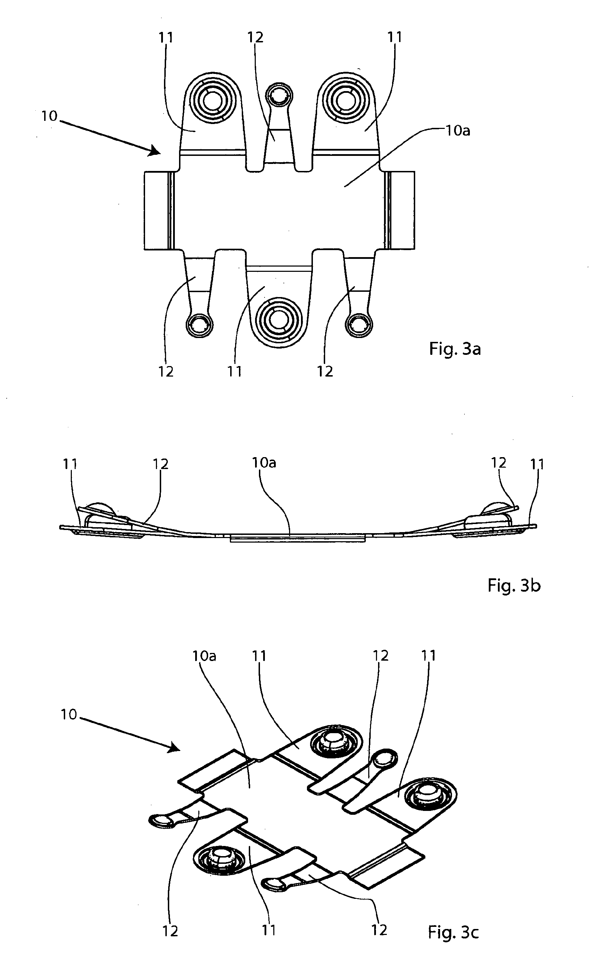

Die Figuren 3a, 3b und 3c zeigen Detailansichten des kombinierten Kontakt/Dämpfungselementes 10, wobei die Figur 3a eine Draufsicht, die Figur 3b eine Seitenansicht und die Figur 3c eine Ansicht von schräg oben zeigt. Figur 3a veranschaulicht noch einmal die genaue Anordnung der Dämpfungs- und Kontaktabschnitte des Kontakt/Dämpfungselementes 10, wobei die Abschnitte bei dem gezeigten Ausführungsbeispiel jeweils V-förmig angeordnet sind.

Wie aus Figur 3b zu erkennen ist, sind bei dem Ausführungsbeispiel nicht nur die Kontaktabschnitte 12, sondern auch die Dämpfungsabschnitte 11 federnd ausgebildet, wodurch eine abrupte Abstoppung der Batterie vermieden wird. Eine derartige federnde Ausgestaltung des Dämpfungselements bietet sich bei dieser Ausführungsform insbesondere an, da das Kontakt/Dämpfungselement 10 großflächig über die Grundplatte 10a in der Aufnahmeschale 1 aufliegt und somit ein Verkippen des Kontakt/Dämpfungselement bei Krafteinwirkung nicht auftreten kann. Wie insbesondere Figur 3b zu entnehmen ist, liegen die Dämpfungselemente nicht in der von der Grundplatte 10a definierten Ebene, sondern sind von der Grundplatte 10a hin zu der (nicht gezeigten) Batterie gewinkelt, wodurch u.a. die Federeigenschaft der Dämpfungsabschnitte ermöglicht wird.

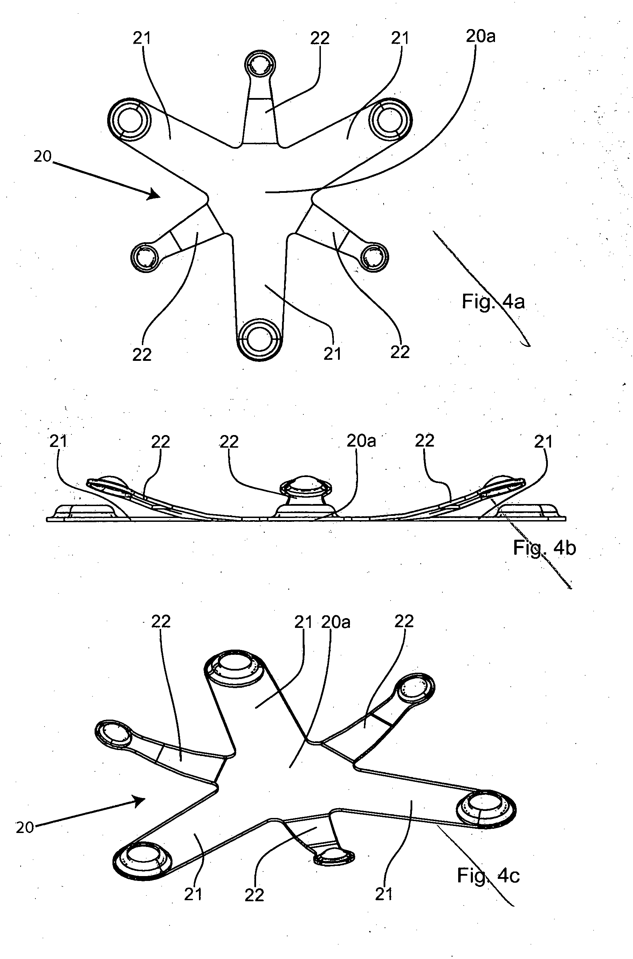

Figuren 4a, 4b und 4c zeigen eine Batterieaufnahme gemäß dem Stand der Technik. Das Kontakt/Dämpfungselement 20 ist in diesem Falle sternförmig ausgebildet, d.h. die Dämpfungs- und Kontaktabschnitte 21, 22 erstrecken sich radial alternierend von der Grundplatte 20a des Kontakt/Dämpfungselementelements 20 nach außen hin. Im Gegensatz zu dem oben beschriebenen Ausführungsbeispiel sind die Dämpfungselemente 21 hier nicht federnd ausgebildet, sondern liegen flach an dem Boden der (nicht gezeigten) Aufnahmeschale an, d.h. sie liegen in der von der Grundplatte definierten Ebene. Dies ist aufgrund der sternförmigen Ausgestaltung, die bei federnden Dämpfungselementen lediglich eine geringe Auflagefläche hin zu dem Boden der Aufnahmeschale aufweisen würde, bevorzugt, um ein Verkippen des Kontakt/Dämpfungselementelements 20 selber zu vermeiden. Die Dämpfungselemente und die federnden Kontaktabschnitte weisen bei diesem Ausführungsbeispiel an ihren Enden ballige bzw. kalottenförmige Erhebungen auf, die die Bewegung der Batterie begrenzen.

## Patentansprüche

1. Batterieaufnahme für einen Kfz-Schlüssel, aufweisend
eine Aufnahmeschale (1) für eine Batterie (2),
Haltemittel (3), die die Batterie (2) in der Aufnahmeschale (1) fixieren,
Kontaktelemente (4, 5), die mit einer elektronischen Baugruppe innerhalb des Kfz-Schlüssels leitend gekoppelt sind,
wobei ein erstes der Kontaktelemente (4) in der Aufnahmeschale (1) angeordnet ist und federnde Kontaktabschnitte (4a) aufweist, auf denen die Batterie (2) aufliegt und die die Batterie (2) gegen die Haltemittel (3) drücken,
**dadurch gekennzeichnet, dass**
in der Aufnahmeschale (1) zumindest ein Dämpfungselement (6) derart angeordnet ist, dass dieses eine Verschiebung der Batterie (2) hin zu dem in der Aufnahmeschale (1) angeordneten Kontaktelement (4) begrenzt, wobei
das Dämpfungselement (6) federnd ausgebildet ist und
im unbelasteten Zustand der Batterieaufnahme, in welchem keine Schwingungen auf die Batterie übertragen werden, kein Kontakt zwischen der Batterie (2) und dem zumindest einen Dämpfungselement (6) besteht.

2. Batterieaufnahme nach Anspruch 1, **dadurch gekennzeichnet, dass** das federnde Kontaktelement eine Grundplatte (4b, 10a) umfasst, wobei das in der Aufnahmeschale (1) angeordnete Dämpfungselement (6) eine Verschiebung der Batterie (2) hin zu der Grundplatte (4b, 10a) derart begrenzt, dass ein Kontakt zwischen der Batterie (2) und der Grundplatte (4b, 10a) vermieden wird.

3. Batterieaufnahme nach Anspruch 1 oder 2, **dadurch gekennzeichnet, dass** das Dämpfungselement (6) leitend mit der elektronischen Baugruppe gekoppelt ist.

4. Batterieaufnahme nach einem der Ansprüche 1 bis 3, **dadurch gekennzeichnet, dass** das zumindest eine Dämpfungselement (6) einstückig mit dem ersten Kontaktelement (4) ausgebildet ist und mit dem ersten Kontaktelement (4) ein kombiniertes Kontakt/Dämpfungselement (10) bildet.

5. Batterieaufnahme nach Anspruch 4, **dadurch gekennzeichnet, dass** das Kontakt/Dämpfungselement (10) mehrere federnde Dämpfungsabschnitte (11) und mehrere federnde Kontaktabschnitte (12) aufweist.

6. Batterieaufnahme nach Anspruch 5, **dadurch gekennzeichnet, dass** die Federkraft des Dämpfungselementes (6) bzw. der Dämpfungsabschnitte (11) vorzugsweise größer als die Federkraft der Kontaktabschnitte (4a, 12) ist.

7. Batterieaufnahme nach Anspruch 5 oder 6, **dadurch gekennzeichnet, dass** sich die Kontaktabschnitte (12) und die Dämpfungsabschnitte (11) des Kontakt/Dämpfungselements (10) radial alternierend von dem Mittelpunkt des Kontakt/Dämpfungselements (10) nach außen hin erstrecken.

8. Batterieaufnahme nach Anspruch 5 oder 6, **dadurch gekennzeichnet, dass** sich die Kontaktabschnitte (12) und die Dämpfungsabschnitte (11) des Kontakt/Dämpfungselements (10) von der Längsachse des Kontakt/Dämpfungselements (10) nach außen hin erstrecken.

9. Batterieaufnahme nach einem der Ansprüche 5 bis 8, **dadurch gekennzeichnet, dass** die federnden Kontaktabschnitte (4a, 12) und/oder die Dämpfungsabschnitte (11) bei ihren Batterie-Kontaktbereichen kalottenförmig ausgebildet sind.

## Claims

1. A battery compartment for a motor vehicle key, having a compartment tray (1) for a battery (2),
retaining means (3), which fix the battery (2) in the compartment tray (1),
contact elements (4, 5), which are conductively coupled to an electronic module within the motor vehicle key,
wherein a first of the contact elements (4) is arranged in the compartment tray (1) and has resilient contact sections (4a), on which the battery (2) rests and which press the battery (2) against the retaining means (3),
**characterised in that**
at least one damping element (6) is arranged in the compartment tray (1) in such a manner that the same delimits a displacement of the battery (2) towards the contact element (4) arranged in the compartment tray (1), wherein
the damping element (6) is resiliently constructed and
in the unloaded state of the battery compartment, in which no vibrations are transferred to the battery, there is no contact between the battery (2) and the at least one damping element (6).

2. The battery compartment according to claim 1, **characterised in that** the resilient contact element comprises a base plate (4b, 10a), wherein the damping element (6) arranged in the compartment tray (1) delimits a displacement of the battery (2) towards the base plate (4b, 10a) in such a manner that a contact between the battery (2) and the base plate (4b, 10a) is prevented.

3. The battery compartment according to claim 1 or 2, **characterised in that** the damping element (6) is conductively coupled to the electronic module.

4. The battery compartment according to one of claims 1 to 3, **characterised in that** the at least one damping element (6) is constructed integrally with the first contact element (4) and forms a combined contact/damping element (10) with the first contact element (4).

5. The battery compartment according to claim 4, **characterised in that** the contact/damping element (10) has a plurality of resilient damping sections (11) and a plurality of resilient contact sections (12).

6. The battery compartment according to claim 5, **characterised in that** the spring force of the damping element (6) or the damping sections (11) is preferably larger than the spring force of the contact sections (4a, 12).

7. The battery compartment according to claim 5 or 6, **characterised in that** the contact sections (12) and the damping sections (11) of the contact/damping element (10) extend outwards in a radially alternating manner from the central point of the contact/damping element (10).

8. The battery compartment according to claim 5 or 6, **characterised in that** the contact sections (12) and the damping sections (11) of the contact/damping element (10) extend outwards from the longitudinal axis of the contact/damping element (10).

9. The battery compartment according to one of claims 5 to 8, **characterised in that** the resilient contact sections (4a, 12) and/or the damping sections (11) are constructed spherically in the battery contact regions thereof.

## Revendications

1. Compartiment de batterie pour une clé de véhicule automobile comprenant une coque de compartiment (1) pour une batterie (2), des moyens de fixation (3), qui fixent la batterie (2) dans la coque de compartiment (1),
des éléments de contact (4, 5) qui sont couplés de façon conductrice avec un bloc électronique à l'intérieur de la clé de véhicule automobile,
dans lequel un premier des éléments de contact (4) est disposé dans la coque de compartiment (1) et comporte des segments de contact à ressort (4a) sur lesquels s'applique la batterie (2) et qui appuient la batterie (2) contre les moyens de fixation (3),
**caractérisé en ce que**
dans la coque de compartiment (1) est disposé au moins un élément d'amortissement (6) de telle sorte que celui-ci limite un déplacement de la batterie (2) vers l'élément de contact (4) disposé dans la coque de compartiment (1),
l'élément d'amortissement (6) étant constitué à ressort et
aucun contact n'ayant lieu entre la batterie (2) et le au moins un élément d'amortissement (6) à l'état non chargé du compartiment de batterie dans lequel aucune vibration n'est transmise à la batterie.

2. Compartiment de batterie selon la revendication 1 **caractérisé en ce que** l'élément de contact à ressort comprend une plaque de base (4b, 10a) dans lequel l'élément d'amortissement (6) disposé dans la coque de compartiment (1) limite un déplacement de la batterie (2) vers la plaque de base (4b, 10a) de telle sorte qu'un contact est évité entre la batterie (2) et la plaque de base (4b, 10a).

3. Compartiment de batterie selon la revendication 1 ou 2 **caractérisé en ce que** l'élément d'amortissement (6) est couplé de façon conductrice avec le bloc électronique.

4. Compartiment de batterie selon l'une quelconque des revendications 1 à 3 **caractérisé en ce que** le au moins un élément d'amortissement (6) est constitué en une seule pièce avec l'élément de contact (4) et forme avec le premier élément de contact (4) un élément combiné contact/amortissement (10).

5. Compartiment de batterie selon la revendication 4 **caractérisé en ce que** l'élément contact/amortissement (10) comporte plusieurs segments d'amortissement à ressort (11) et plusieurs segments de contact à ressort (12).

6. Compartiment de batterie selon la revendication 5 **caractérisé en ce que** l'élasticité de l'élément d'amortissement (6) ou des segments d'amortissement (11) est de préférence plus importante que l'élasticité des segments de contact (4a, 12).

7. Compartiment de batterie selon la revendication 5 ou 6 **caractérisé en ce que** les segments de contact (12) et les segments d'amortissement (11) de l'élément contact/amortissement (10) s'étendent radialement en alernance vers l'extérieur depuis le centre de l'élément contact/amortissement (10).

8. Compartiment de batterie selon la revendication 5 ou 6 **caractérisé en ce que** les segments de contact (12) et les segments d'amortissement (11) de l'élément contact/amortissement (10) s'étendent vers l'extérieur depuis l'axe longitudinal de l'élément contact/amortissement (10).

9. Compartiment de batterie selon l'une quelconque des revendications 5 à 8 **caractérisé en ce que** les segments de contact à ressort (4a, 12) et/ou les segments d'amortissement (11) à ressort sont constitués en forme de calotte dans leurs zones de contact de batterie.
